Europäisches Patentamt

European Patent Office

Office européen des brevets

(11) Veröffentlichungsnummer: **0 121 167**
**A1**

(12) **EUROPÄISCHE PATENTANMELDUNG**

(21) Anmeldenummer: **84102971.3**

(22) Anmeldetag: **17.03.84**

(51) Int. Cl.³: **F 16 H 5/74**

(30) Priorität: **30.03.83 PC T/LU83/00096**

(43) Veröffentlichungstag der Anmeldung:
**10.10.84 Patentblatt 84/41**

(84) Benannte Vertragsstaaten:
**DE GB SE**

(71) Anmelder: **ZAHNRADFABRIK FRIEDRICHSHAFEN AKTIENGESELLSCHAFT**
**Löwentaler Strasse 100 Postfach 2520**
**D-7990 Friedrichshafen 1(DE)**

(72) Erfinder: **Schreiner, Friedrich**
**Eichelen 16**
**D-7996 Kehlen(DE)**

(54) Schalteinrichtung.

(57) Schalteinrichtung zum halb- oder vollautomatischen Schalten von mehrstufigen Zahnradwechselgetrieben mit mechanischer Synchronisierung, insbesondere für Kraftfahrzeuge mit einem elektrisch/elektronischen Steuerteil, wobei der Gangwechsel an einem Wählschalter von Hand auslösbar ist oder automatisch veranlaßt wird mit rein elektrischen Steuer- und Stelleinrichtungen oder mit Stellkolben, Steuerventilen oder auch Magnetventilen für die Bewegung der bei einem Gangwechsel zu verschiebenden Getriebe- und Kupplungsteile, wobei der Wählschalter zwei Wählhebel hat, durch die der für eine automatische Schaltung vorgesehene Gangbereich sowohl nach oben wie nach unten festgelegt wird und daß der Wählschalter noch eine für beide Wählhebel wirksame Sperre aufweist, die immer durch den in der Automatik jeweils eingelegten Gang wirkt, so daß bei Verstellung je eines Wßahkhebels dieser in dem eingelegten Gang festgehalten wird und daß eine Verstellung für eine Servohandschaltung nur mit den beiden parallel geführten Wählhebeln möglich ist. Der Wählschalter hat dann, wenn die Automatik nur die Gänge des Grund- und Gruppengetriebes ausgelegt ist, noch einen elektrischen Schalter, mit dem die z.B. schnelle bzw. lamgsame Splitgruppe gewählt oder geschaltet wird. Die Gangfesthaltung kann auch zusätzlich über einen Druckschalter, der vorrangig im Bereich des Gashebels angeordnet ist, erfolgen. Der Fahrer ist also in der Lage, zu jedem Zeitpunkt in z.B. eine automatische Gangschaltung einzugreifen oder auch jederzeit von einer Handschaltung auf Automatikschaltung umzustellen.

FIG.1

ZAHNRADFABRIK FRIEDRICHSHAFEN
Aktiengesellschaft
Friedrichshafen

TZS/pz-hg
0121167 F
24.03.1983

Diese Erfindung betrifft eine Schalteinrichtung nach dem Oberbegriff von Anspruch 1, wobei die für den halbautomatischen und auch für den vollautomatischen Betrieb vorgesehenen Schalteinrichtungsteile sowohl rein elektrisch mit Magnetschaltern, aber auch elektrohydraulisch oder elektropneumatisch mit Magnetventilen und Stellkolben ausgelegt sein können.

Auch die mit mechanischer Synchronisiereinrichtung versehenen Zahnradwechselgetriebe können aus nur einem Grundgetriebe bestehen, aber auch zur Erzielung von zusätzlichen Gängen noch mit einer Bereichs- und/oder Splitgruppe erweitert sein und schließlich können sowohl das Grundgetriebe wie auch die Bereichs- und Splitgruppe wahlweise in Vorgelege- bzw. Planetenbauweise ausgeführt sein.

Aus der DE-AS 20 36 732 ist eine Vorrichtung zum synchronisierten Schalten von Stufenwechselgetrieben bekannt. Die Antriebsleistung wird über eine Anfahr- und Trennkupplung vom Motor auf das in Vorgelegebauart ausgeführte Stufenwechselgetriebe übertragen. Der Gleichlauf der zu schaltenden Kupplungen wird über eine Zentralsynchronisierung erreicht. Über ein elektrisches Steuergerät und einen Gangvorwähler wird z. B. eine halbautomatische Schaltung ermöglicht, wobei die Steuerung ausschließlich elektrisch und die Betätigung zur Gangverstellung hydraulisch vorgenommen wird. Ein Beispiel für eine vollautomatische Lösung ist nicht dargestellt.

Aus der DE-AS 21 36 960 ist eine Schaltvorrichtung für das halb- oder vollautomatische Schalten eines mehrstufigen Zahnradwechselgetriebes mit einer mechanischen Synchronisierung, die den Schaltkupplungen zugeordnet ist, bekannt. Die Schaltung erfolgt elektrohydraulisch und wird von einem elektrischen oder elektronischen Steuerteil über Steuerventile bewirkt, wobei beim halbautomatischen Schalten Drucktasten für die Vorwahl des jeweils einzuschaltenden Ganges bzw. der zu schaltenden Getriebestufe sowie eine Drucktaste zum Auslösen des vorgewählten Schaltvorganges vorhanden sind.

Beim vollautomatischen Betrieb wird das Steuerteil mit Signalen aus dem Betriebszustand des zugehörigen Kraftfahrzeuges beaufschlagt, z. B. der Motordrehzahl und der Gaspedalstellung sowie der Stellung der Schaltmuffen und der zwischen Motor und Getriebe vorgesehenen Kupplungen.

Allen bekannten Getrieben, die automatisch ausgelegt sind, ist gemeinsam, daß der Fahrer bis auf den Kick-down und die Vorwahl bestimmter Gangbereiche, die nur automatisch geschaltet werden sollen, keine Eingriffsmöglichkeiten hat.

Dies ist besonders im Schwerlastverkehr und im bergigen Gelände kritisch, wenn die Automatik in einem Zeitpunkt schaltet, in dem ein erfahrener und umsichtiger Fahrer nicht schalten würde. Bei Automatgetrieben in Vorgelegebauweise, die zur Schaltung noch eine Trennkupplung haben und bei denen der Gangwechsel mit einer, wenn auch kurzen, Zugkraftunterbrechung erfolgt, kann eine solche, nicht gewollte Schaltung besonders gefährlich sein.

Die Anpassung des Fahrzustandes, besonders bei einem schweren Kraftfahrzeug, an den Fahrzeugantrieb ist mit einem vielgängigen, in Vorgelege- und Gruppenbauweise ausgeführten Zahnradwechselgetriebe sehr gut gelöst. Trotz günstiger Gestaltung der Schalteinrichtungen mit Schalterleichterungen für den Fahrer, z. B. HH- und Splitschaltungen am Schalthebel, werden vom Fahrer nur selten alle günstigen Anpassungen, die möglich sind, auch ausgenutzt.

Ausgehend von der letztgenannten Schrift ist es deshalb Aufgabe der Erfindung, eine Schalteinrichtung nach dem Oberbegriff von Anspruch 1 so zu verbessern, daß der Fahrer trotz optimaler Anpassung des Fahrzeuges an den Antriebsmotor mit einem Vielganggetriebe vom Schaltaufwand maximal entlastet wird und im Bedarfsfall in die Übersetzung im Antriebsstrang eingreifen kann, so daß bei einer möglichen, in bezug auf die Wirtschaftlichkeit optimalen Fahrweise auch eine hohe Sicherheit durch einen schnellen Eingriff des Fahrers ermöglicht wird.

Diese Aufgabe wird mit den kennzeichnenden Merkmalen von Anspruch 1 erfüllt.

Infolge der zwei Wählhebel ist es, wie in P 32 47 658.2 ausführlich beschrieben, leicht möglich, großen Einfluß auf den Bereich zu nehmen, der automatisch geschaltet werden soll, und dem Fahrer ist über eine Ganganzeige auch bekannt, welcher Gang durch die Automatik jeweils eingelegt ist. Infolge der dem jeweils eingelegten Gang entsprechenden akuten Sperre im Wählschalter lassen sich beide Wählhebel schnell von beiden Schaltbereichsbegrenzungen aus bis zu dieser Sperre bewegen, so daß die Automatik keinen Gangwechsel mehr bewirken kann. Der Fahrer ist nunmehr in der Lage, mit den parallel geführten Wählhebeln das Getriebe von Hand in bekannter Weise über eine Servoeinrichtung zu schalten.

In den Ansprüchen 2 bis 5 wird die Erfindung besonders vorteilhaft ausgestaltet.

Durch eine z. B. optische Ganganzeige nach Anspruch 2, die den jeweils eingelegten Gang im automatischen Betrieb oder den von der Automatik vorgeschlagenen Gang während der Hand-Servoschaltung - Wählhebelstellung parallel - erkennen läßt, erhält der Fahrer in beiden Betriebszuständen Entscheidungshilfen, die der Sicherheit, insbesondere bei Vielganggetrieben, sehr dienlich sind. Wird diese Ganganzeige noch mit einer Schaltanzeige oder Schaltaufforderung ergänzt, tritt eine weitere Bedienungsvereinfachung während der Hand-Servoschaltung auf, die der Sicherheit dient, weil der Fahrer nicht die Stellung der Wählhebel im Auge haben muß. In bestimmten Einsatzfällen kann in einfacher Weise auch nur eine Schaltanzeige (Schaltaufforderung) ausreichend sein.

Wird z. B. neben dem Gashebel noch ein Druckschalter angeordnet, der für die Zeit der Betätigung im automatischen Betrieb den jeweils geschalteten Gang festhält, so kann durch diesen Eingriff in noch schnellerer Weise eine evtl. vorgesehene Hochschaltung verhindert werden, zumindest solange, bis die beiden Wählhebel in

ZAHNRADFABRIK FRIEDRICHSHAFEN
Aktiengesellschaft
Friedrichshafen

TZS/pz-hg
0121167   F
24.03.1983

Parallelstellung eine Hand-Servoschaltung ermöglichen. Für besonders kritische Einsätze - z. B. sehr schweres Fahrzeug im schwierigen Gelände - ist auch eine Schalteinrichtung vorteilhaft, die
dem Fahrer den von der Automatik vorgesehenen Gang oder auch nur
die Schaltabsicht anzeigt, wobei die eigentliche Schaltung jedoch
erst durch einen Schaltimpuls - Betätigung des Druckschalters -
selbst ausgelöst werden kann.

Weitere Einzelheiten der Erfindung werden anhand eines Ausführungsbeispieles und anhand von Zeichnungen erläutert, wobei die
Einzelheiten der Zeichnung Gegenstand der Erfindung sind. Es
zeigen:

Fig. 1      eine Schalteinrichtung in schematischer Darstellung.

Fig. 2      den Wählschalter im Zusammenhang mit der aktiven
            Sperre, schematisch dargestellt.

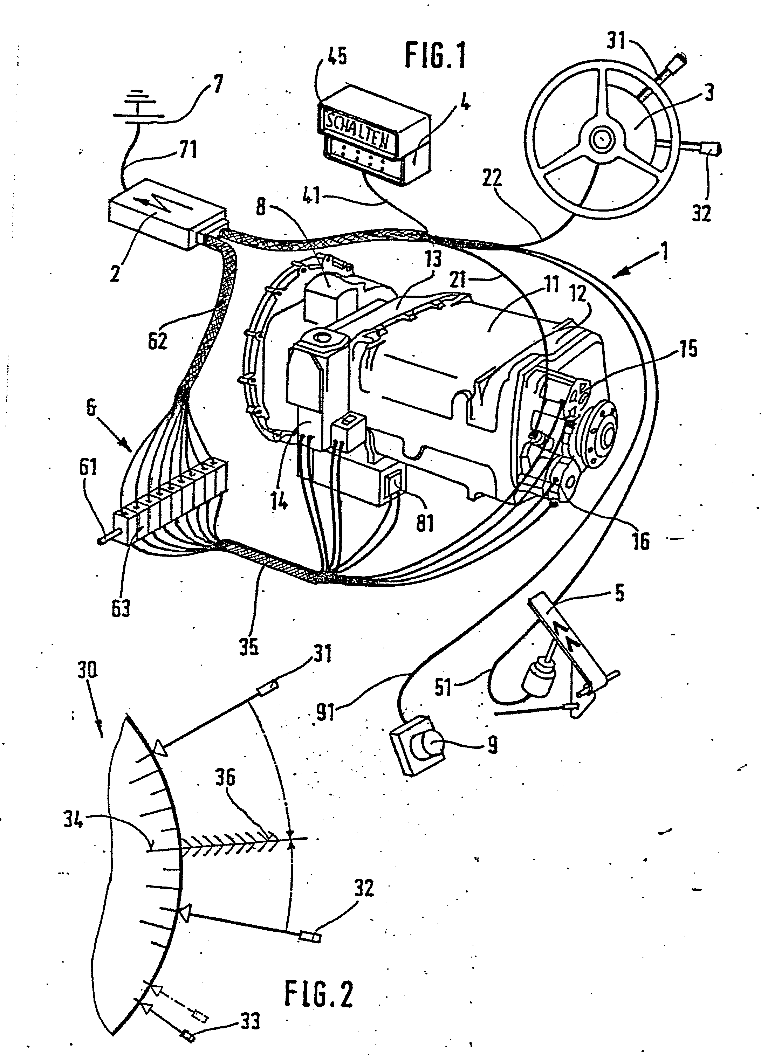

In Fig. 1 ist mit 1 das mehrstufige Zahnradwechselgetriebe
mit 4 Gängen im Grundgetriebe 11, einem nachgeschalteten Gruppengetriebe 12 mit zwei Bereichen und einer am Getriebeeingang angeordneten Splitgruppe 13 dargestellt, so daß sich, wie bekannt,
16 schaltbare Vorwärtsgänge ergeben. Die durch das Gruppengetriebe 12 verdoppelten Gänge des Grundgetriebes 11, also 8 Gänge bzw.
durch die Splitgruppe 13 nochmals verdoppelte Gangzahl, lassen
sich mit dem aus der P 32 47 658.2 bekannten Wählschalter 3 schalten, dann, wenn die beiden z. B. Wählhebel parallel geführt verstellt werden. Im automatischen Betrieb wird mit diesen Wählhebeln 31, 32 der Bereich, der für eine automatische Schaltung
vorgesehen ist, begrenzt. Werden nur 8 Gänge für eine durchgängige
automatische Schaltung vorgesehen und der Wählschalter 3 wie auch
das elektronische Steuerteil 2 auf diese Gangzahl ausgelegt, so
wird am Wählschalter 3 noch ein z. B. elektrischer Schalter 33
angebracht, der die Verstellung in die jeweils schnelle bzw. langsame Splitgruppe bewirkt, so daß sich zwei Gruppen mit jeweils 8 Gängen ergeben, die vorgewählt, aber auch im automatischen Betrieb, wie bei Hand-Servoschaltungen, zusätzlich geschaltet werden können.

2 ist ein elektrisches Steuerteil mit Leitungen 71 zu einer Stromquelle 7 (Batterie), 51 zum Fahrhebel 5 (Gaspedal) 21 zur Erfassung der Getriebeabtriebsdrehzahl, 41 zur Gang- und Schaltanzeige 4, 45 und 22 zum Wählschalter 3. Dieser Wählschalter 3 ist also ausschließlich mit dem elektronischen Steuerteil 2 verbunden, während die Betätigungseinrichtungen 14, 15, 16, 17, 81 für das Grundgetriebe 11 - z. B. an der Drehwelle oder auch an den Schaltmuffen selbst - Gruppen- und Splitgetriebe 12, 13 und für die Anfahr- und Trennkupplung 8 sowohl über elektrische wie auch über Druckmittelleitungen 35 verbunden sein können. Ist z. B. die Schalteinrichtung elektropneumatisch ausgelegt, so ist noch eine Druckluftquelle 61 mit einer Ventilbatterie 6 notwendig, wobei die einzelnen Magnetventile 63 z. B. über die Leitungen 62 vom elektronischen Steuerteil 2 aus Gebersignale erhalten.
Ein elektrischer Druckschalter 9, der vorrangig, nur solange er betätigt wird, ein Signal über eine elektrische Leitung 91 an das elektronische Steuerteil 2 abgibt, ist noch z. B. neben dem Gaspedal (Fahrhebel 5) angeordnet. Dabei kann dieses Signal sowohl eine von der Automatik vorgesehene Schaltung unterbinden oder auch auslösen.

Bei einer automatischen Fahrweise wird gemäß P 32 47 658.2 der Bereich, in dem z. B. automatische Gangschaltungen erfolgen sollen, von den Wählhebeln 31, 32 am Wählschalter 3 begrenzt. In einer Ganganzeige 4, die gesondert angeordnet, aber auch mit dem Wählschalter 3 verbunden sein kann, wird der jeweils von der Automatik - elektronisches Steuerteil 2 - geschaltete Gang angezeigt. Dabei steuert die Elektronik z. B. drehzahl- und fahrzustandsabhängig die Magnetventile 63 der Ventilbatterie 6 und z. B. über Druckluft werden die Betätigungseinrichtungen 14, 15, 16, 81 für das mehrstufige Zahnradwechselgetriebe 1 wie auch für die Anfahr- und Trennkupplung 8 beaufschlagt. Mit dem Druckschalter 9 kann, während dieser betätigt ist, die aktive Umschaltung unterdrückt werden. Das Festhalten des eingelegten Ganges ist auch möglich, wenn die beiden Wählhebel 31, 32 des Wählschalters 3 von außen her bis zum gerade eingelegten Gang verstellt werden und damit nebeneinander stehen. Die Ganganzeige 4 kann dabei weiterhin den von der Automatik vorgesehenen Gang anzeigen, aber gleichfalls beim gerade eingelegten Gang auch festgehalten werden. Die Verstellung der Ganghebel wird begünstigt, weil jeweils in der Stellung des eingelegten Ganges eine von beiden Seiten wirkende Sperre 34 aktiviert ist, so daß die Wählhebel 31, 32 nicht darüber hinaus verstellt werden können. Mit den parallel geführten Wählhebeln 31, 32 können dann, wie bekannt, Handschaltungen vorgenommen werden, wobei vom Wählschalter 3 aus über das elektronische Steuerteil 2 die Magnetventile 63 beaufschlagt werden, die in bekannter Weise die Betätigungseinrichtungen 14, 15, 16, 81 am Getriebe 1 und an der Anfahr- und Trennkupplung 8 verstellen. An dieser Ganganzeige 4 wird dabei der Gang angezeigt, der von der Automatik zur Schaltung vorgesehen ist. Ist eine Schaltanzeige (Schaltaufforderung) vorgesehen - allein oder zusätzlich -, so leuchtet diese immer dann auf, wenn der eingelegte Gang der Servohandschaltung von der vorgesehenen automatischen Gangschaltung abweicht. Der Druckschalter 9 kann mit der Automatik (elektronisches Steuerteil 2) so verknüpft sein, daß von dem elektronischen Steuerteil, je nach Programm, ein Gang angeboten und noch angezeigt (Ganganzeige 4) wird, aber erst durch einen vom Fahrer über den Druckschalter ausgelösten Impuls auch eingelegt wird.

Die Automatik und damit die Gangeinteilung des Wählschalters 3 kann auch nur für die Gänge des Grund- 11 in Verbindung mit dem Gruppengetriebe 12, z. B. 8 Gängen, ausgelegt sein. In so einem Fall erfolgt die Umschaltung von z. B. der schnellen in die langsame Splitgruppe oder umgekehrt über einen elektrischen Schalter, der vorzugsweise mit am Wählschalter angebracht ist.

In Fig. 2 ist schematisch ein Ausschnitt 30 des Wählschalters 3 mit den Wählhebeln 31, 32 gezeigt. Beim eingelegten Gang 34 ist die Sperre 36 markiert, von der die Wählhebel 31, 32 bei Verstellung angehalten werden. 33 ist der Wählschalter zur Auslösung der Betätigung für die langsame bzw. schnelle Splitgruppe 13.

7

Bezugszeichen

| | | | |
|---|---|---|---|
| 1 | Mehrstufiges Zahnrad-<br>wechselgetriebe | 35 | Leitungen |
| 11 | Grundgetriebe | 36 | Sperre |
| 12 | Gruppengetriebe | 30 | Ausschnitt |
| 13 | Splitgruppe | 4 | Ganganzeige |
| 14 | Betätigungseinrichtung<br>für Drehwelle | 41 | Leitung |
| 15 | Betätigungseinrichtung<br>für Gruppengetriebe | 45 | Schaltanzeige<br>(Schaltaufforderung) |
| 16 | Betätigungseinrichtung<br>für Splitgetriebe | 5 | Fahrhebel (Gaspedal) |
| 17 | Drehwelle | 51 | Leitung |
| 2 | Elektronisches Steuerteil | 6 | Ventilbatterie |
| 21 | Leitung | 61 | Druckluftanschluß |
| 22 | Leitung | 62 | Leitung |
| 3 | Wählschalter | 63 | Magnetventil |
| 31 | Wählhebel | 7 | Stromquelle (Batterie) |
| 32 | Wählhebel | 71 | Leitung |
| 33 | Wählschalter<br>für Splitgruppe | 8 | Anfahr- und Trennkupplung |
| | | 81 | Betätigungseinrichtung |
| | | 9 | Druckschalter |
| | | 91 | Elektrische Leitung |

ZAHNRADFABRIK FRIEDRICHSHAFEN
Aktiengesellschaft
Friedrichshafen

TZS/pz-hg
Akt 0121167.F
24.03.1983

Schalteinrichtung

A n s p r ü c h e

1. Schalteinrichtung zum halb- oder vollautomatischen Schalten von mehrstufigen Zahnradwechselgetrieben mit mechanischer Synchronisierung, insbesondere für Kraftfahrzeuge, mit einem elektrisch/elektronischen Steuerteil, wobei der Gangwechsel an einem Wählschalter von Hand auslösbar ist oder automatisch veranlaßt und selbsttätig gesteuert wird, mit Steuer- und Stelleinrichtungen zur Bewegung der bei dem Gangwechsel zu verschiebenden Getriebe- und Kupplungsteile, dadurch g e k e n n z e i c h n e t , daß der Wählschalter (3) zwei Wählhebel (31, 32) hat, durch die der für eine automatische Schaltung vorgesehene Gangbereich sowohl nach oben wie auch nach unten festgelegt wird und daß der Wählschalter (3) noch eine für beide Wählhebel (31, 32) wirksame Sperre (36) aufweist, die immer in dem durch die Automatik jeweils eingelegten Gang wirkt, so daß bei Verstellung je eines Wählhebels (31, 32) dieser in dem eingelegten Gang (34) festgehalten wird und daß eine Verstellung für eine Servo-Handschaltung in beide Wählrichtungen nur mit den beiden parallel geführten Wählhebeln (31, 32) möglich ist.

2. Schalteinrichtung nach Anspruch 1, dadurch g e k e n n z e i c h n e t , daß noch eine Ganganzeige (4) und/oder Schaltanzeige (45) im automatischen Betrieb dem Fahrer den jeweils eingelegten Gang auch optisch anzeigt.

3. Schalteinrichtung nach einem der vorgenannten Ansprüche, dadurch g e k e n n z e i c h n e t , daß im Bereich des Fahrers noch ein Druckschalter (9) angeordnet ist, mit dessen Betätigung im automatischen Betrieb der jeweils eingelegte Gang festgehalten und eine von der Automatik beabsichtigte Schaltung verhindert wird.

ZAHNRADFABRIK FRIEDRICHSHAFEN
Aktiengesellschaft
Friedrichshafen

9

TZS/pz-hg
0121167 F
24.03.1983

4. Schalteinrichtung nach Anspruch 1 oder 2, dadurch  g e -
k e n n z e i c h n e t ,   daß im Bereich des Fahrers noch ein
Druckschalter (9) angeordnet ist, mit dessen Betätigung eine von
der Automatik beabsichtigte und angezeigte Schaltung (Ganganzeige 4 und/oder Schaltanzeige 45) ausgelöst wird.

5. Schalteinrichtung nach einem der Ansprüche 3 oder 4, dadurch  g e k e n n z e i c h n e t ,   daß der Druckschalter (9)
als Tastenschalter ausgebildet im Fußbereich des Fahrers angeordnet ist und bei Nichtbetätigung von einer Feder in die Nullage
zurückgestellt wird.

FIG.1

FIG.2

ZF 5862F

0121167

Europäisches
Patentamt

**EUROPÄISCHER RECHERCHENBERICHT**

## EINSCHLÄGIGE DOKUMENTE

EP 84102971.3

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | FR - A - 2 448 077 (PONT-A-MOUSSON)<br>* Gesamt * | 1 | F 16 H 5/74 |
| A | DE - A - 1 930 046 (ARDIE-WERK)<br>* Gesamt, insbesondere Seite 17, Absatz 1; Seite 18, Absatz 2 * | 1-5 | |
| A | US - A - 3 779 096 (HURST)<br>* Gesamt * | 1 | |
| A,D | DE - B2 - 2 036 732 (BOSCH)<br>* Gesamt * | | |
| A,D | DE - A - 2 136 960 (ARDIE-WERK)<br>* Gesamt * | | |
| A | FR - A - 2 094 672 (SCHRADER)<br>* Gesamt * | | |

RECHERCHIERTE
SACHGEBIETE (Int. Cl. ³)

B 60 K 20/00

B 60 K 41/00

F 16 H  5/00

Der vorliegende Recherchenbericht wurde für alle Patentansprüche erstellt.

| Recherchenort | Abschlußdatum der Recherche | Prüfer |
|---|---|---|
| WIEN | 22-05-1984 | SCHATEK |